# FASCICULE DE BREVET EUROPEEN

(11) **EP 0 698 984 B1**
(45) Date de publication et mention de la délivrance du brevet: **09.04.2003**
(21) Numéro de dépôt: 95112745.5
(22) Date de dépôt: 12.08.1995
(51) Int. Cl.: H04M 1/72, H04M 1/05

(54) **Téléphone portatif sans fil laissant les mains libres**
Schnurloses und tragbares Telefon mit Freisprecheinrichtung
Handsfree portable cordless telephone

(30) Priorité: 23.08.1994 FR 9410206
(43) Date de publication de la demande: 28.02.1996
(73) Titulaire: ETA SA Manufacture Horlogère Suisse, 2540 Grenchen (CH)
(72) Inventeur: Meister, Pierre-André, CH-2502 Bienne (CH)
(74) Mandataire: Patry, Didier Marcel Pierre

(56) Documents cités:
- DE-U- 9 200 683
- GB-A- 2 074 817
- US-A- 4 591 661
- US-A- 4 741 030
- US-A- 4 930 148
- US-A- 4 993 065
- US-A- 5 113 428

## Description

La présente invention concerne un téléphone portatif sans fil comportant un appareil principal rassemblant des moyens récepteur et émetteur pourvus d'une antenne et des moyens de composition d'un numéro d'appel, un microphone et au moins un écouteur.

Qu'il s'agisse d'un téléphone portatif sans fil à courte distance (quelques centaines de mètres selon la norme CT2) ou à longue distance (selon les normes DECT ou GSM), il a déjà été proposé des téléphones selon le concept générique énoncé ci-dessus. Généralement, cet appareil comporte un combiné tenu à la main et appliqué contre l'oreille. Il comporte un écouteur et un microphone, l'écouteur et le microphone étant séparés par une zone comprenant des moyens de composition du numéro d'appel, particulièrement un clavier à touches. Le combiné est pourvu d'une antenne, télescopique ou non. Un tel appareil est peu ergonomique en le sens qu'il doit être constamment tenu dans une main, cette dernière n'étant ainsi pas disponible pour vaquer à d'autres occupations, par exemple la consultation de dossiers pendant que dure la conversation téléphonique. On ajoutera qu'un tel combiné est lourd et volumineux entraînant une fatigue musculaire surtout pour les personnes dont l'occupation principale est l'utilisation du téléphone. Il y a enfin risque d'endommagement de l'antenne lors de la manipulation de l'appareil.

Sont connus également des moyens de transmission radio composés d'un casque d'écoute et d'un microphone attaché à ce casque et utilisés par exemple par les reporters sportifs. Ce système cependant ne constitue nullement un téléphone et ne comporte donc pas de moyens de composition d'un numéro d'appel.

On connaît également du document US-A-4,930,148 un téléphone portatif sans fil comportant un appareil principal comprenant un récepteur et un émetteur pourvu d'une antenne, des touches permettant la composition d'un numéro d'appel, un microphone et deux écouteurs. Le téléphone est conformé pour être porté sur la tête d'un utilisateur en laissant ses mains libres.

On connaît également du document US 4,591,661 un téléphone portable sans fil comprenant un boîtier émetteur récepteur sur lequel est connecté au moyen de deux fils de connection un casque d'écoute. Les fils de connection du casque d'écoute sont reliés à une distance fixe à un boîtier muni d'un microphone lequel est connecté au boîtier émetteur récepteur.

Pour pallier les inconvénients cités ci-dessus la présente invention est remarquable en ce sens que le téléphone portatif répondant à la définition du premier paragraphe de cette description est conformé pour être porté sur le corps humain en laissant les mains libres, tout en permettant le réglage de la distance qui sépare le microphone de la bouche.

Les caractéristiques et avantages de l'invention apparaîtront à la lecture de la description d'un mode particulier d'exécution de la présente invention. La description qui suit est faite en référence au dessin annexé qui est donné uniquement à titre d'exemple et qui comporte les figures suivantes :
- la figure 1 montre un téléphone portatif sans fil selon un premier mode d'exécution de l'invention,
- la figure 2 montre en détail une partie du téléphone selon la figure 1,
- la figure 3 montre en détail une partie du téléphone selon la figure 1, ce détail étant une variante de l'exécution selon la figure 2, et
- la figure 4 montre un mécanisme d'attache du microphone susceptible d'équiper les systèmes présentés aux figures 1, 2 et 3.

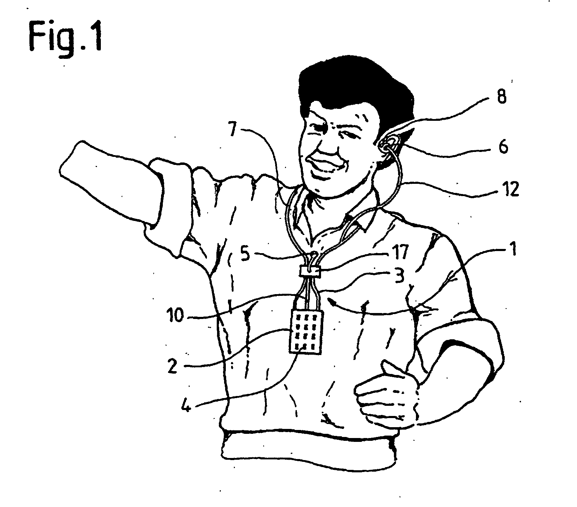

On voit à la figure 1 un téléphone portatif sans fil 1 comportant un appareil principal 2. Cet appareil comprend des moyens récepteur et émetteur connus pourvus d'une antenne 3. L'appareil principal comporte des moyens également connus 4 de composition d'un numéro d'appel, en l'occurrence un clavier à touches. Un microphone 5 et un écouteur 6 sont reliés à l'appareil principal 2.

Comme cela ressort clairement de cette figure, le téléphone 1 est porté sur le corps humain en laissant les mains libres.

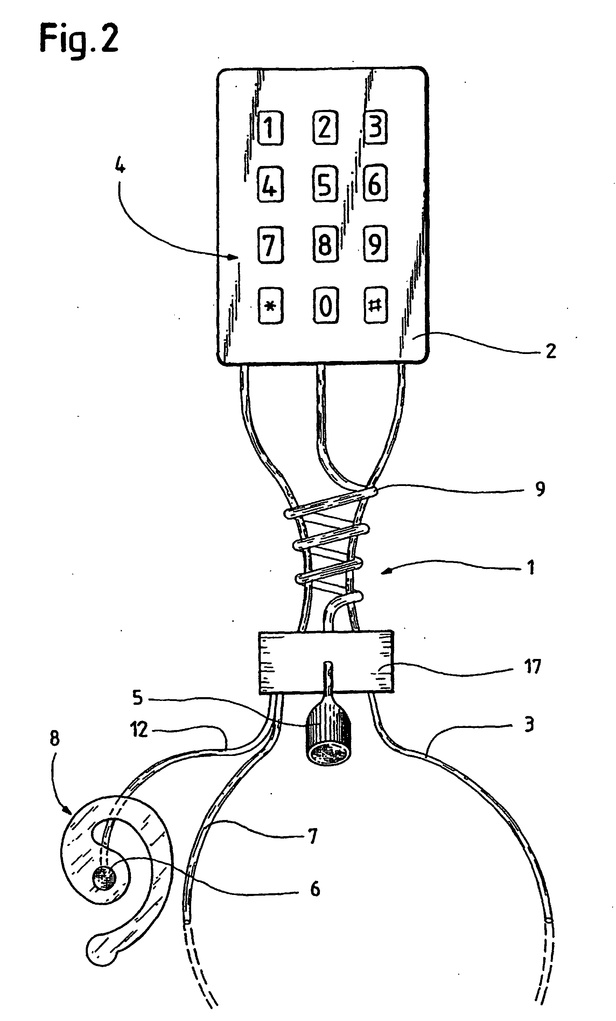

Plus particulièrement, la figure 1 montre que l'appareil principal est attaché à un collier 7 passant autour du cou de l'utilisateur. Le microphone 5 est fixé sur un dispositif 17 glissant le long du collier 7, cela pour permettre de régler la distance qui sépare ledit microphone de la bouche de l'utilisateur. Le dispositif glissant 17 permet de trouver une distance optimum, soit celle réalisant un compromis idéal entre d'une part un bon rendement acoustique et d'autre part un emplacement pratique eu égard à l'habillement porté par l'utilisateur. La figure 1 montre encore que l'écouteur 6 est du type prothèse auditive par exemple celui représenté en référence 8 sur la figure 2.

Si l'on se reporte maintenant à la figure 2 montrant en détail la configuration du téléphone portatif sans fil, on s'aperçoit que l'appareil principal 2 est muni de moyens de composition du numéro d'appel qui consistent en un clavier à touches 4 qui comporte, outre les chiffres 0 à 9, les fonctions étoiles * et dièse #, classiques dans les appareils modernes. Le dispositif 17 glissant sur le collier 7 porte le microphone 5 qui est relié à l'appareil principal 2 au moyen d'un câble 9 spiralé autour du collier. On comprendra que le diamètre de la spirale va diminuer quand on approche le dispositif 17 de la bouche de l'utilisateur ou augmenter au contraire quand on éloigne ce dispositif de ladite bouche. On évite ainsi une connexion ballante entre le dispositif 17 et l'appareil 2 qui pourrait présenter des risques d'accrochage gênants. La figure 2 suggère également d'inclure une antenne 3 dans le collier 7. Le collier 7 offre tout naturellement cette possibilité, ce qui autorise une antenne de grand développement sans risque de détérioration quelconque. Enfin la figure 2 montre que l'écouteur 6 est relié à l'appareil principal 2 au moyen d'un câble 12 longeant partiellement le collier 7. On notera cependant que cette liaison pourrait être supprimée si une liaison radio était établie entre l'écouteur 6 et l'appareil principal 2. L'écouteur 6 est du type prothèse auditive et se trouve, comme le montre la figure 2, au centre d'un limaçon plat 8 que l'on enroule autour de l'oreille.

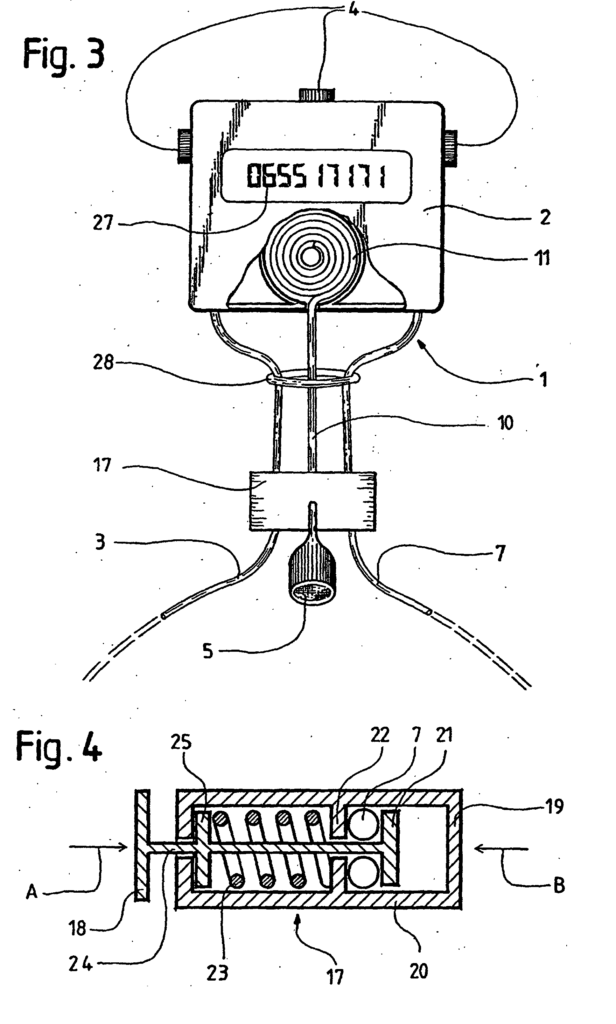

La figure 3 est une variante de réalisation par rapport à celle de la figure 2. En figure 3, l'appareil principal 2 est muni de moyens de composition du numéro d'appel qui consiste à utiliser des touches 4 qui, lorsqu'on les presse selon un certain ordre, permettent de composer ledit numéro d'appel qui apparaît sur une cellule 27 à cristal liquide. Par ailleurs, le dispositif 17 glissant sur le collier 7 porte le microphone 5 qui est relié à l'appareil principal 2 au moyen d'un câble 10 rappelé par un enrouleur 11 disposé à l'intérieur de l'appareil 2. Le câble 10 est ainsi tendu en permanence entre le dispositif 17 et l'appareil 2. Pour avoir un système de câbles plus compact, on suggère l'utilisation d'un anneau 28 dans lequel passent les fils du collier 7 ainsi que le câble 10. Dans la variante de la figure 3, le collier 7 sert également de support à l'antenne 3 et l'écouteur est relié à l'appareil 2 comme décrit au figure 2.

Une manière de réaliser le dispositif 17 qui porte le microphone 5 est illustrée en figure 4. Un boîtier 20 retient un piston 24 comportant un disque d'arrêt 25 et un disque de serrage 21. Les fils du collier 7 sont disposés entre le disque de serrage et une paroi percée 22 faisant corps avec le boîtier 20. Un ressort de rappel 23 disposé entre la paroi 22 et le disque 25 pince les fils du collier 7 entre ladite paroi 22 et le disque 21. En saisissant le dispositif entre un poussoir 18 extérieur au piston 24 et la paroi 19 dudit dispositif et en exerçant les forces antagonistes illustrées par les flèches A et B, on dégage le collier 7 ce qui permet le glissement dudit dispositif le long dudit collier.

L'appareil principal 2 est un instrument de petit volume pour être porté sur le corps. Sa grandeur peut être comparée à celle présentée par un chronographe suspendu autour du cou et destiné notamment à chronométrer des événements sportifs.

## Revendications

1. Téléphone (1) portatif sans fil comportant un appareil principal (2) rassemblant des moyens récepteur et émetteur pourvus d'une antenne (3) et des moyens (4) de composition d'un numéro d'appel, un microphone (5) et au moins un écouteur (6), ledit téléphone étant conformé pour être porté sur le corps humain en laissant les mains libres, **caractérisé par le fait que** l'appareil principal (2) est attaché à un collier (7) passant autour du cou de l'utilisateur, et que le microphone (5) est fixé sur un dispositif (17) glissant le long dudit collier pour permettre de régler la distance qui le sépare de la bouche.

2. Téléphone selon la revendication 1, **caractérisé par le fait que** l'écouteur (6) est du type prothèse auditive (8) retenue à l'oreille de l'utilisateur.

3. Téléphone selon la revendication 2, **caractérisé par le fait que** le microphone (5) est relié à l'appareil principal (2) au moyen d'un câble (9) spiralé autour du collier (7).

4. Téléphone selon la revendication 1, **caractérisé par le fait que** le microphone (5) est relié à l'appareil principal (2) au moyen d'un câble (10) rappelé par un enrouleur (11) disposé à l'intérieur dudit appareil.

5. Téléphone selon la revendication 1, **caractérisé par le fait que** le collier (7) sert de support à l'antenne (3) dont est pourvu l'appareil principal (2).

6. Téléphone selon la revendication 1, **caractérisé par le fait que** l'écouteur (6) est relié à l'appareil principal (2) au moyen d'un câble (12) longeant partiellement le collier (7).

## Claims

1. Portable cordless telephone (1) comprising a main apparatus (2) combining reception and transmission means provided with an antenna (3) and means (4) for composing a call number, a microphone (5) and at least one ear-piece (6), said telephone being adapted to be worn on the human body, leaving the hands free, **characterised in that** the main apparatus (2) is attached to a collar (7) passing around the neck of the user, and **in that** the microphone (5) is fixed to a device (17) sliding along said collar to facilitate adjustment of the distance separating it from the mouth.

2. Telephone according to Claim 1, **characterised in that** the ear-piece (6) is of the hearing aid type (8) worn in the ear of the user.

3. Telephone according to Claim 2, **characterised in that** the microphone (5) is connected to the main apparatus (2) by means of a cable (9) spiralled around the collar (7).

4. Telephone according to Claim 1, **characterised in that** the microphone (5) is connected to the main apparatus (2) by means of a cable (10) retracted by an idler (11) disposed inside said apparatus,

5. Telephone according to Claim 1, **characterised in that** the collar (7) serves to support the antenna (3) with which the main apparatus is provided (2).

6. Telephone according to Claim 1, **characterised in that** the ear-piece (6) is connected to the main apparatus (2) by means of a cable (12) running partially alongside the collar (7).

## Patentansprüche

1. Schnurloses tragbares Telephon (1), das ein Hauptgerät (2), das Empfänger- und Sendermittel, die mit einer Antenne (3) versehen sind, und Mittel (4) zum Erzeugen einer Rufnummer enthält, ein Mikrophon (5) und wenigstens einen Hörer (6) umfaßt, wobei das Telephon am menschlichen Körper getragen werden kann und dabei die Hände freiläßt, **dadurch gekennzeichnet, daß** das Hauptgerät (2) an einem Halsband (7) befestigt ist, das um den Hals des Benutzers verläuft, und daß das Mikrophon (5) an einer Vorrichtung (17) befestigt ist, die längs des Halsbandes gleitet, um die Einstellung des Abstandes, der es vom Mund trennt, zu ermöglichen.

2. Telephon nach Anspruch 1, **dadurch gekennzeichnet, daß** der Hörer (6) vom Typ Ohrhörer (8) ist, der im Ohr des Benutzers gehalten wird.

3. Telephon nach Anspruch 2, **dadurch gekennzeichnet, daß** das Mikrophon (5) mit dem Hauptgerät (2) mittels eines Kabels (9) verbunden ist, das spiralförmig um das Halsband (7) verläuft.

4. Telephon nach Anspruch 1, **dadurch gekennzeichnet, daß** das Mikrophon (5) mit dem Hauptgerät (2) mittels eines Kabels (10) verbunden ist, das von einer in dem Gerät angeordneten Aufwickeleinrichtung (11) zurückgeholt wird.

5. Telephon nach Anspruch 1, **dadurch gekennzeichnet, daß** das Halsband (7) als Träger der Antenne (3) dient, mit der das Hauptgerät (2) versehen ist.

6. Telephon nach Anspruch 1, **dadurch gekennzeichnet, daß** der Hörer (6) mit dem Hauptgerät (2) mittels eines Kabels (12) verbunden ist, das sich teilweise in dem Halsband (7) befindet.
